# EUROPEAN PATENT SPECIFICATION

(11) **EP 2 819 886 B1**
(45) Date of publication and mention of the grant of the patent: **04.07.2018**
(21) Application number: 13754426.8
(22) Date of filing: 30.01.2013
(51) Int. Cl.: B60R 16/023, H04L 12/40, H04L 29/08

(54) **CONTROL OF FUNCTIONS IN MOTOR VEHICLES**
STEUERUNG VON FUNKTIONEN IN KRAFTFAHRZEUGEN
COMMANDE DE FONCTIONS DANS DES VÉHICULES AUTOMOBILES

(30) Priority: 29.02.2012 SE 1250184
(43) Date of publication of application: 07.01.2015
(73) Proprietor: Scania CV AB, 151 87 Södertälje (SE)
(72) Inventor: ROOS, Per, S-153 36 Järna (SE); BERGQVIST, Ola, S-131 40 Nacka (SE)
(74) Representative: Scania CV AB
(86) International application number: PCT/SE2013/050070
(87) International publication number: WO 2013/129992

(56) References cited:
- WO-A1-00/38953
- WO-A1-00/38953
- GB-A- 2 334 359
- US-A1- 2003 080 619
- US-A1- 2004 217 649
- US-A1- 2004 217 649
- US-A1- 2006 088 044
- US-A1- 2007 143 689
- US-A1- 2008 195 234
- US-A1- 2011 119 556

## Description

### BACKGROUND TO THE INVENTION AND PRIOR ART

The present invention relates generally to control of functions in motor vehicles. The invention relates in particular to a system according to the preamble of claim 1 and a method according to the preamble of claim 6. It relates also to a computer programme according to claim 11 and a computer-readable medium according to claim 12. In modern vehicles a large number of functions and control systems are operated via electronic switches and knobs. The laying of lines to operating devices is commonly facilitated by using communication buses not only to monitor the settings of operating devices but also to transmit signals from sensors and the like to sundry monitoring systems. Communication buses are also used with advantage to alter settings of and make adjustments to control devices and actuators for implementing the functions as indicated bv an operator via settings of operating devices. US 2004/0217649 describes a method and a system for controlling functions within a vehicle via switches, buttons, levers and knobs. US 2011/0119556 describes a self-detecting and configuring system for position-dependent interconnected control units, ECUs (electronic control units). Each control unit is here associated with identification and configuration codes so that the connection node specific to each control unit can be determined electronically by reading the identification codes when the control units are being installed. Any hardware and/or software compatibility problems may be detected and solved by means of self-configuring software. So-called generic control units are used. This means that there may well be large software overlaps between the content of different control units, with the result that any replacement control unit subsequently fitted may receive at least parts of its required software from other control units in the network. The function of a control unit is determined by its position (node location) in the network, resulting in substantial complications if it is subsequently desired to expand or in some other way modify the node structure of the network.

US 6,865,460 describes a method for automatic allocation of addresses to the nodes in a network of CAN (controller area network) type. The method ensures that the network will be conflict-free as regards addressing and avoids the need for programming before installation. After installation, however, the respective functions of the nodes have to be allocated in conventional ways.

US 2009/0132118 proposes a solution whereby a shared control unit is used to control a plurality of controlled items in a vehicle with the object of reducing the processor requirement in each individual control unit. The shared control unit comprises inter alia a so-called plug-and-play administration unit which handles the configuration of the vehicle's control system. The configuration may thus be relatively simple but the need for programming at the time of installing a control unit is not eliminated.

### PROBLEMS ASSOCIATED WITH PRIOR ART

The above solutions are advantageous in various ways. In particular, the approach using communication buses is advantageous in terms of material efficiency and flexibility. However, a disadvantage of solutions of this kind is that operating devices have to be configured at the time of fitting in the vehicle. A certain function has for example to be allocated each position for each control means. An address space for the vehicle has also to be configured.

### SUMMARY OF THE INVENTION

The object of the present invention is therefore to propose a solution which overcomes the above problems and thus makes it easy to fit operating devices in a vehicle both at the time of manufacture and on the occasion of subsequent additions and repairs/ servicing.

One aspect of the invention achieves the object by the system described in the introduction comprising at least one peripheral unit and a main unit. The at least one peripheral unit comprises at least one operating device configured to be manipulated by an operator with the object of ordering a desired function of the vehicle. Each peripheral unit is configured to generate a respective signal which indicates a setting of the at least one operating device and an identity for the one peripheral unit, which identity is fixed and unique within the vehicle. The main unit is in communicative connection with each peripheral unit and is configured to receive the signals from the peripheral units and use them as a basis for generating at least one command directed at causing the functions desired by an operator to be effected.

This system is advantageous in that the peripheral units signal the settings of their respective operating devices without having to be configured at all. There is also no complication about providing the operating devices with identities from an identity space which is sufficiently extensive for identity overlap within a certain vehicle to be very unlikely. Should such overlap nevertheless occur, it would be easy to replace one of the operating devices concerned by an alternative operating device associated with a different identity.

In one embodiment of this aspect of the invention, the signal from the at least one peripheral unit indicates also an identity for each operating device in the at least one peripheral unit, thus also providing assurance of effective selection of individual operating devices within a certain peripheral unit.

In another embodiment of this aspect of the invention, the main unit is communicatively connected to the at least one peripheral unit via a first communication bus which is arranged to make two or more logic connections possible across a shared physical medium, achieving the same advantages as regards efficient line laying as in prior art.

In yet another embodiment of this aspect of the invention, the first communication bus is expandable, making it possible for a second peripheral unit to be connected to a first peripheral unit which is connected to the main unit via the first communication bus, with the result that after the connection has been made the second peripheral unit shares the first communication bus with the first peripheral unit. This means that expanding an existing installation may be very uncomplicated and operationally safe.

In a further embodiment of this aspect of the invention, the main unit is connected to a second communication bus which is arranged to make two or more logic connections possible across a shared physical medium in order to convey the at least one command to at least one electronic control unit on board the vehicle for the desired function to be effected. This is advantageous in that communication with control devices and actuators on board the vehicle may thus also be very effective.

According to yet another embodiment of this aspect of the invention, the respective setting indicated by the at least one operating device represents a generic status indication. Further, the main unit is configurable to interpret the generic status indication from a given operating device of a peripheral unit as a particular function to be effected depending on how the main unit is programmed. Thus, the solution becomes very flexible, and can easily be adapted at any time. It is also uncomplicated to replace an operating device if so required. Moreover, the storage cost for replacement operating devices becomes low because any given operating device can perform a multitude of functions.

Another aspect of the invention achieves the object by the method described in the introduction whereby at least one operating device is assumed to be comprised in at least one peripheral unit. A main unit is also assumed to be communicatively connected to the at least one peripheral unit. The proposed method comprises: generating a respective signal in the at least one peripheral unit such that the at least one signal indicates a setting of the at least one operating device and an identify for the at least one peripheral unit, which identity is fixed and unique within the vehicle; receiving the at least one signal in the main unit; and in response thereto generating at least one command directed at causing the desired function to be effected. The advantages of this method and those of its preferred embodiments are indicated by the above discussion of the proposed system.

A further aspect of the invention achieves the object by a computer programme directly downloadable to the internal memory of a computer and comprising software for controlling the steps of the method proposed above when said programme is run on a computer.

Another aspect of the invention achieves the object by a computer-readable medium which has stored on it a programme adapted to enabling a computer to control the steps of the method proposed above.

### BRIEF DESCRIPTION OF THE DRAWINGS

The present invention will now be explained in more detail with reference to embodiments described as examples with reference to the attached drawings.
- Figure 1: is a schematic diagram of a proposed system, and
- Figures 2-3: are flowcharts illustrating the general method according to the invention.

### DESCRIPTION OF EMBODIMENTS OF THE INVENTION

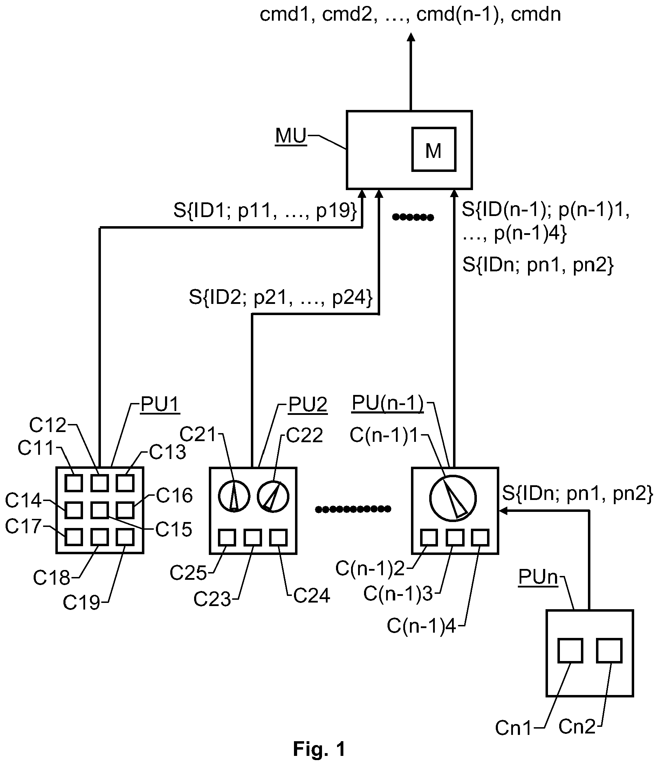

We refer initially to Figure 1 depicting a system for control of functions in a motor vehicle. The proposed system comprises a number of peripheral units PU1, PU2, ..., PU(n-1), PUn and a main unit MU.

The peripheral units PU1, PU2, ..., PU(n-1), PUn are provided with a set of operating devices C11, ..., Cn2, and each accommodate at least one of these operating devices. The operating devices are configured to be manipulated by an operator with the object of ordering a desired function of the vehicle. They may thus be respectively represented by electronic switches/ buttons C11-C19, C23-C25, C(n-1)2-C(n-1)4 and Cn1, Cn2 and/ or knobs C21, C22, C(n-1)1.

Each peripheral unit PU1, PU2, ..., PU(n-1), PUn is configured to generate a signal S, respectively S{ID2; p21, ..., p24}, ..., S{ID(n-1); p(n-1)1, ..., p(n-1)4} and S{IDn; pn1, pn2}, which indicates a setting of the at least one operating device, respectively p11, ..., p19; p21, ..., p24; p(n-1), ..., p(n-1)4 and pn1, pn2. The term "setting" means here for example a position/ status of a two-position breaker, e.g. "off/on", or a certain position of a multi-position breaker, or a knob, among a set of predefined positions.

The signal S indicates also an identity for the peripheral unit PU1, PU2, ..., PU(n-1), PUn, respectively ID1, ID2, ..., ID(n-1) and IDn, from which the signal S derives. Each identity ID1, ID2, ..., ID(n-1), IDn is presumed to be fixed and unique within the vehicle. Preferably, if a certain peripheral unit is provided with two or more operating devices, the signal S will indicate an identity for the respective operating device, C11, ..., Cn2, in the peripheral unit PU1, PU2, ..., PU(n-1), PUn. The signal S thus unambiguously indicates each operating device's setting/status, (provided that each identity ID1, ID2, ..., ID(n-1) and IDn is unique within the respective vehicle). The likelihood of the identities thus being locally unique may be enhanced by the peripheral units PU1, PU2, ..., PU(n-1), PUn being allocated identities from a relatively large identity space with contents which recur in such a way that units manufactured/delivered within a certain amount of time, e.g. a month or a year, are allocated mutually different identities.

The main unit MU is in communicative connection with each of the peripheral units PU1, PU2, ..., PU(n-1) and PUn, either via direct connections as illustrated to PU1, PU2 and PU(n-1) or via a shared communication bus, e.g. of CAN or LIN (local interconnect network) type. Such a communication bus, which is thus arranged to make two or more logic connections possible across a shared physical medium, is advantageous in that it results in very efficient utilisation of the vehicle's signal connection lines.

The communicative connection between the main unit MU and the peripheral units PU1, PU2, ..., PU(n-1) and PUn works preferably in both directions so that the main unit MU can return a respective acknowledgement message in response to a signal received by it. This makes it possible for the peripheral unit to indicate to the operator (e.g. by lighting up a lamp) that the desired function has been activated.

Preferably, the respective setting p11, ..., pn2 indicated by the at least one operating device C11, ..., Cn2 represents a generic status indication, e.g. "on"/"off" or "active"/"inactive." The main unit MU is then configurable to interpret the generic status indication from a given operating device C11, ..., Cn2 of a peripheral unit PU1, PU2, ..., PU(n-1) or PUn as a particular function to be effected depending on how the main unit MU is programmed. Consequently, high flexibility is attained in terms of functionality and later replacement of any operating device C11, ..., Cn2.

In a preferred embodiment of the invention, the communication bus is expandable, as illustrated in Figure 1 by the peripheral unit PUn connected to the peripheral unit PU(n-1). The peripheral unit PU(n-1) is here assumed to be initially connected to the main unit MU via a communication bus. The peripheral unit PUn is subsequently connected to the peripheral unit PU(n-1). The peripheral unit PUn is thus provided with access to said communication bus which, after the connection has been made, is thus shared with the peripheral unit PU(n-1) as regards communication with the main unit MU, e.g. when transmitting the signals S.

The main unit MU is configured to receive the signals S from the peripheral units PU1, PU2, ..., PU(n-1), PUn and to use them as a basis for generating one or more commands cmd1, cmd2, ..., cmd(n-1), cmdn directed at causing the desired function to be effected. This typically means the main unit MU delivering said command or commands to one or more electronic control units on board the vehicle which then activate relevant control devices and/or actuators. In a preferred embodiment of the invention the main unit MU is connected to a communication bus which is separate from any communication bus via which the signals S are received and which is arranged to make two or more logic connections possible across a shared physical medium in order to convey said command or commands cmd1, cmd2, ..., cmd(n-1), cmdn to at least one electronic control unit on board the vehicle in order to effect the function which an operator has indicated, by setting of operating devices, that he/she wishes to have effected.

The main unit MU comprises with advantage a processor/computer which is caused to function as above by means of a computer programme stored in a memory unit M, which may itself either be part of, or be communicatively connected to, the processor/computer.

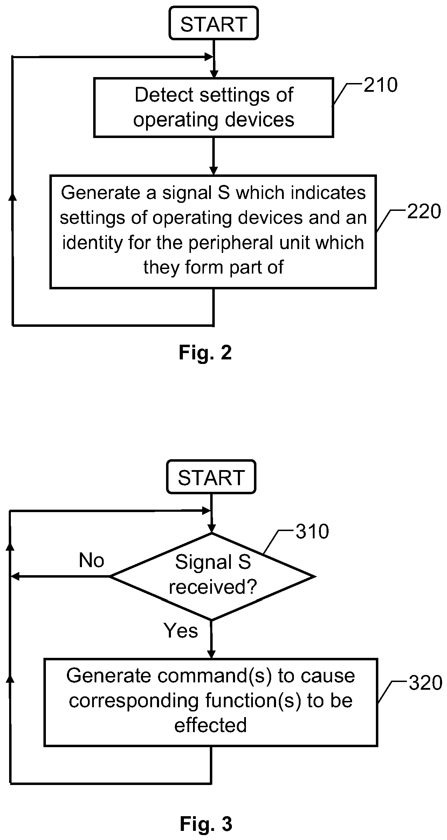

To sum up, the general method according to the invention will now be described with reference to the flowcharts in Figures 2 and 3. Figure 2 illustrates schematically the method conducted in each peripheral unit PU1, PU2, ..., Pun, whereas Figure 3 illustrates the method implemented in the main unit MU.

A first step 210 in the procedure according to Figure 2 detects how the peripheral unit's operating devices are set. A subsequent step 220 generates a signal S which indicates how the operating devices are set. It also indicates for the peripheral unit an identity which is unique within the respective vehicle. The procedure then loops back to step 210.

A first step 310 in the procedure according to Figure 3 investigates whether a signal S has been received and, if such is not the case, loops the procedure back to step 310. Conversely, a signal S which is received is followed by a step 320 of generating one or more commands on the basis of the signal received. The command or commands are directed at effecting the function or functions indicated via the settings of the operating devices, i.e. those which an operator of the vehicle wishes to have effected. The procedure then loops back to step 310.

According to the invention the signals S may be generated on an interrupt-controlled principle such as indicated by steps 210 and 310 above, or the settings of the operating devices may be monitored and be communicated to the main unit MU at predetermined intervals according to a time multiplex structure, e.g. n times per second.

In any case, the method steps described with reference to Figures 2 and 3 may be controlled by means of a programmed computer unit. In addition, although the embodiments of the invention described above with reference to the drawings comprise a computer and processes conducted in a computer, the invention extends to computer programmes, particularly computer programmes on or in a support suited to practical implementation of the invention.

The programme may be in the form of source code, object code, a code which is intermediate between source and object code, e.g. in partly compiled form, or in any other form suitable for use in implementing the process according to the invention. The support may be any entity or device capable of carrying the programme. The support may for example comprise a storage medium such as a flash memory, a ROM (read only memory), e.g. a CD (compact disc) or a semiconductor ROM, EPROM (electrically programmable ROM), EEPROM (erasable EPROM), or a magnetic recording medium, e.g. a floppy disc or hard disc. It may also be a transmitting support such as an electrical or optical signal which can be conveyed by an electrical or optical cable or via radio or in some other way. Where the programme takes the form of a signal which can be conveyed directly by a cable or some other device or means, the support may take the form of such a cable, device or means. Alternatively it may be an integrated circuit in which the programme is embedded and which is adapted to conducting, or being used in the conducting of, the respective processes.

The invention is not limited to the embodiments described with reference to the drawings but may be varied freely within the scope of the claims set out below.

## Claims

1. A system for control of functions in a motor vehicle and comprising
a set of operating devices (C11, ..., Cn2) configured to be manipulated by an operator with the object of ordering a desired function of the vehicle, wherein the system comprises:
at least one peripheral unit (PU1, PU2, ..., PU(n-1), Pun) provided with at least one operating device (C11, ..., Cn2) from among said set of operating devices, which at least one peripheral unit (PU1, PU2, ..., PU(n-1), Pun) is configured to generate a respective signal (S) indicating a setting (p11, ..., pn2) of the at least one operating device (C11, ..., Cn2) and an identity (ID1, ID2, ..., ID(n-1), IDn) for the at least one peripheral unit, the identity (ID1, ID2, ..., ID(n-1), IDn) being fixed and unique within the vehicle, and
a main unit (MU) in communicative connection with the at least one peripheral unit (PU1, PU2, ..., PU(n-1), Pun) and configured to receive the signal (S) from the at least one peripheral unit (PU1, PU2, ..., PU(n-1), Pun) and generate on the basis thereof at least one command (cmd1, cmd2, ..., cmd(n-1), cmdn) directed at causing the desired function to be effected **characterised in that** said respective setting (p11, ..., pn2) indicated by the at least one operating device (C11, ..., Cn2) represents a generic status indication, and
the main unit (MU) is configurable to interpret the generic status indication from a given operating device (C11, ..., Cn2) of a peripheral unit (PU1, PU2, ..., PU(n-1), Pun) as a particular function to be effected depending on how the main unit (MU) is programmed.

2. The system according to claim 1, wherein the signal (S) from the at least one peripheral unit (PU1, PU2, ..., PU(n-1), Pun) further indicates an identity for respective operating devices (C11, ..., Cn2) in the at least one peripheral unit (PU1, PU2, ..., PU(n-1), Pun).

3. The system according to either of claims 1 and 2, wherein the main unit (MU) is communicatively connected to the at least one peripheral unit (PU1, PU2, ..., PU(n-1), Pun) via a first communication bus which is arranged to make two or more logic connections possible across a shared physical medium.

4. The system according to claim 3, wherein the first communication bus is expandable so that a second peripheral unit (PUn) can be connected to a first peripheral unit (PU (n-1)) which is connected to the main unit (MU) via the first communication bus, with the result that after the connection has been made the second peripheral unit (PUn) shares the first communication bus with the first peripheral unit (PU (n-1)).

5. The system according to any one of the preceding claims, wherein the main unit (MU) is connected to a second communication bus which is arranged to make two or more logic connections possible across a shared physical medium in order to convey the at least one command (cmd1, cmd2, ..., cmd(n-1), cmdn) to at least one electronic control unit on board the vehicle for the desired function to be effected.

6. A method for control of functions in a motor vehicle, comprising a set of operating devices (C11, ..., Cn2) configured to be manipulated by an operator with the object of ordering a desired function of the vehicle, wherein at least one operating device (C11, ..., Cn2) from among said set of operating devices is comprised in at least one peripheral unit (PU1, PU2, ..., PU(n-1), Pun), and a main unit (MU) is communicatively connected to the at least one peripheral unit (PU1, PU2, ..., PU(n-1), Pun), which method comprises:
generating a respective signal (S) in the at least one peripheral unit (PU1, PU2, ..., PU(n-1), Pun), which at least one signal (S) indicates a setting (p11, ..., pn2) of the at least one operating device (C11, ..., Cn2) and an identity (ID1, ID2, ..., ID(n-1), IDn) for the at least one peripheral unit, the identity (ID1, ID2, ..., ID(n-1), IDn) being fixed and unique within the vehicle,
receiving the at least one signal (S) in the main unit (MU) and responding thereto by
generating the at least one command (cmd1, cmd2, ..., cmd(n-1), cmdn) directed at causing the desired function to be effected **characterised in that** said respective setting (p11, ..., pn2) indicated by the at least one operating device (C11, .... Cn2) represents a generic status indication, and the method comprises:
interpreting the generic status indication from a given operating device (C11, ..., Cn2) of a peripheral unit (PU1, PU2, ..., PU(n-1), Pun) as a particular function to be effected depending on a programming of the main unit (MU) .

7. The method according to claim 6, in which the signal (S) from the at least one peripheral unit (PU1, PU2, ..., PU(n-1), Pun) further indicates an identity for respective operating devices (C11, ..., Cn2) in the at least one peripheral unit (PU1, PU2, ..., PU(n-1), Pun).

8. The method according to either of claims 6 and 7, comprising transmitting the at least one signal (S) from the at least one peripheral unit (PU1, PU2, ..., PU(n-1), Pun) to the main unit (MU) via a first communication bus which is arranged to make two or more logic connections possible across a shared physical medium.

9. The method according to claim 8, wherein the first communication bus is expandable and the method further comprises:
connecting a second peripheral unit (Pun) to a first peripheral unit (P(un-1)) which is connected to the main unit (MU) via a first communication bus, and thereafter
transmitting a signal (S) from the second peripheral unit (Pun) to the main unit (MU) via the first communication bus.

10. The method according to any one of claims 6 to 9, wherein the main unit (MU) is connected to a second communication bus which is arranged to make two or more logic connections possible across a shared physical medium, and the method further comprises:
conveying the at least one command (cmd1, cmd2, ..., cmd(n-1), cmdn) across the second communication bus to at least one electronic control unit on board the vehicle for the desired function to be effected.

11. A computer programme directly downloadable to the internal memory (M) of a computer and comprising software for controlling the steps according to any one of claims 6 to 10 when said programme is run on the computer.

12. A computer-readable medium (M) which has stored on it a programme which is adapted to enabling a computer to control the steps according to any one of claims 6 to 10.

## Patentansprüche

1. System zur Steuerung von Funktionen in einem Kraftfahrzeug, das aufweist,
einen Satz Bedienungseinrichtungen (C11, ... Cn2), die zur Betätigung durch einen Bediener mit der Aufgabe, eine gewünschte Funktion des Fahrzeugs anzufordern, konfiguriert sind, wobei das System aufweist:
mindestens eine Peripherieeinheit (PU1, PU2, ..., PU(n-1), PUn), die mit mindestens einer Bedienungseinrichtung (C11, ... Cn2) aus dem Satz Bedienungseinrichtungen versehen ist, wobei die mindestens eine Peripherieeinheit (PU1, PU2, ..., PU(n-1), PUn) zum Erzeugen eines entsprechenden Signals (S) konfiguriert ist, das eine Einstellung (p11, ..., pn2) der mindestens einen Bedienungseinrichtung (C11, ... Cn2) und eine Identität (ID1, ID2, ..., ID(n-1), IDn) für die mindestens eine Peripherieeinheit angibt, wobei die Identität (ID1, ID2, ..., ID(n-1), IDn) festgelegt und innerhalb des Fahrzeugs eindeutig ist, und
eine Haupteinheit (MU) in kommunikativer Verbindung mit der mindestens einen Peripherieeinheit (PU1, PU2, ..., PU(n-1), PUn) und zum Empfangen des Signals (S) von der mindestens einen Peripherieeinheit (PU1, PU2, ..., PU(n-1), PUn) und zum Erzeugen auf Basis desselben mindestens eines Befehls (cmd1, cmd2, ..., cmd(n-1, cmdn) konfiguriert, der darauf gerichtet ist, die Ausführung der gewünschten Funktion zu bewirken,
**dadurch gekennzeichnet, dass** die von der mindestens einen Bedienungseinrichtung (C11, ... Cn2) angezeigte entsprechende Einstellung (p11, ..., pn2) eine allgemeine Statusanzeige repräsentiert, und
die Haupteinheit (MU) zur Interpretation der allgemeinen Statusanzeige von einer gegebenen Bedienungseinrichtung (C11, ... Cn2) einer Peripherieeinheit (PU1, PU2, ..., PU(n-1), PUn) als eine bestimmte Funktion konfiguriert werden kann, die in Abhängigkeit von der Programmierung der Haupteinheit (MU) auszuführen ist.

2. System nach Anspruch 1, wobei das Signal (S) von der mindestens einen Peripherieeinheit (PU1, PU2, ..., PU(n-1), PUn) ferner eine Identität für entsprechende Bedienungseinrichtungen (C11, ... Cn2) in der mindestens einen Peripherieeinheit (PU1, PU2, ..., PU(n-1), PUn) angibt.

3. System nach einem der Ansprüche 1 oder 2, wobei die Haupteinheit (MU) über einen ersten Kommunikationsbus, der so angeordnet ist, dass er zwei oder mehr logische Verbindungen über ein gemeinsam genutztes physikalische Medium ermöglicht, mit der mindestens einen Peripherieeinheit (PU1, PU2, ..., PU(n-1), PUn) kommunikativ verbunden ist.

4. System nach Anspruch 3, wobei der erste Kommunikationsbus erweitert werden kann, so dass eine zweite Peripherieeinheit (PUn) mit einer ersten Peripherieeinheit (PU(n-1)) verbunden werden kann, die mit der Haupteinheit (MU) über den ersten Kommunikationsbus verbunden ist, mit dem Resultat, dass die zweite Peripherieeinheit (PUn) nach Herstellung der Verbindung den ersten Kommunikationsbus mit der ersten Peripherieeinheit (PU(n-1)) gemeinsam nutzt.

5. System nach einem der vorigen Ansprüche, wobei die Haupteinheit (MU) mit einem zweiten Kommunikationsbus verbunden ist, der so angeordnet ist, dass er zwei oder mehr logische Verbindungen über ein gemeinsam genutztes physikalische Medium ermöglicht, um den mindestens einen Befehl (cmd1, cmd2, ..., cmd(n-1, cmdn) an mindestens eine elektronische Steuereinheit an Bord des Fahrzeugs zur Ausführung der gewünschten Funktion zu übertragen.

6. Verfahren zur Steuerung von Funktionen in einem Kraftfahrzeug, aufweisend einen Satz Bedienungseinrichtungen (C11, ..., Cn2), die zur Betätigung durch einen Bediener mit der Aufgabe, eine gewünschte Funktion des Fahrzeugs anzufordern, konfiguriert sind, wobei
mindestens eine Bedienungseinrichtung (C11, ... Cn2) aus dem Satz Bedienungseinrichtungen in mindestens einer Peripherieeinheit (PU1, PU2, ..., PU(n-1), PUn) vorgesehen ist, und eine Haupteinheit (MU) kommunikativ mit der mindestens einen Peripherieeinheit (PU1, PU2, ..., PU(n-1), PUn) verbunden ist, wobei das Verfahren aufweist:
Erzeugen eines entsprechenden Signals (S) in der mindestens einen Peripherieeinheit (PU1, PU2, ..., PU(n-1), PUn), wobei das mindestens eine Signal (S) eine Einstellung (p11, ..., pn2) der mindestens einen Bedienungseinrichtung (C11, ... Cn2) und eine Identität (ID1, ID2, ..., ID(n-1), IDn) für die mindestens eine Peripherieeinheit angibt, wobei die Identität (ID1, ID2, ..., ID(n-1), IDn) festgelegt und innerhalb des Fahrzeugs eindeutig ist,
Empfangen des mindestens einen Signals (S) in der Haupteinheit (MU) und Antworten darauf durch
Erzeugen des mindestens einen Befehls (cmd1, cmd2, ..., cmd(n-1, cmdn), der darauf gerichtet ist, die Ausführung der gewünschten Funktion zu bewirken, **dadurch gekennzeichnet, dass** die von der mindestens einen Bedienungseinrichtung (C11, ... Cn2) angezeigte entsprechende Einstellung (p11, ..., pn2) eine allgemeine Statusanzeige repräsentiert, und das Verfahren aufweist:
Interpretieren der allgemeinen Statusanzeige von einer gegebenen Bedienungseinrichtung (C11, ... Cn2) einer Peripherieeinheit (PU1, PU2, ..., PU(n-1), PUn) als eine bestimmte Funktion, die in Abhängigkeit von der Programmierung der Haupteinheit (MU) auszuführen ist.

7. Verfahren nach Anspruch 6, wobei das Signal (S) von der mindestens einen Peripherieeinheit (PU1, PU2, ..., PU(n-1), PUn) ferner eine Identität für entsprechende Bedienungseinrichtungen (C11, ... Cn2) in der mindestens einen Peripherieeinheit (PU1, PU2, ..., PU(n-1), PUn) angibt.

8. Verfahren nach einem der Ansprüche 6 oder 7, das das Senden des mindestens einen Signals (S) von der mindestens einen Peripherieeinheit (PU1, PU2, ..., PU(n-1), PUn) über einen ersten Kommunikationsbus an die Haupteinheit (MU) aufweist, der so angeordnet ist, dass er zwei oder mehr logische Verbindungen über ein gemeinsam genutztes physikalische Medium ermöglicht.

9. Verfahren nach Anspruch 8, wobei der erste Kommunikationsbus erweiterbar ist und das Verfahren ferner aufweist:
Verbinden einer zweiten Peripherieeinheit (PUn) über einen ersten Kommunikationsbus mit einer ersten Peripherieeinheit (PU(n-1)), die mit der Haupteinheit (MU) über einen ersten Kommunikationsbus verbunden ist, und danach
Senden eines Signals (S) von der zweiten Peripherieeinheit (PUn) über den ersten Kommunikationsbus an die Haupteinheit (MU).

10. Verfahren nach einem der Ansprüche 6 bis 9, wobei die Haupteinheit (MU) mit einem zweiten Kommunikationsbus verbunden ist, der so angeordnet ist, dass er zwei oder mehr logische Verbindungen über ein gemeinsam genutztes physikalisches Medium ermöglicht, und das Verfahren ferner aufweist:
Übertragen des mindestens einen Befehls (cmd1, cmd2, ..., cmd(n-1, cmdn) über den zweiten Kommunikationsbus an mindestens eine elektronische Steuereinheit an Bord des Fahrzeugs zur Ausführung der gewünschten Funktion.

11. Computerprogramm, das direkt in den internen Speicher (M) eines Computers heruntergeladen werden kann, und das Software zum Steuern der Schritte gemäß einem der Ansprüche 6 bis 10 aufweist, wenn das Programm auf dem Computer abläuft.

12. Computerlesbares Medium (M), auf dem ein Programm gespeichert ist, mit dem ein Computer die Schritte gemäß einem der Ansprüche 6 bis 10 steuern kann.

## Revendications

1. Système pour la commande de fonctions dans un véhicule automobile, comprenant
un ensemble de dispositifs de commande (C11, ..., Cn2) configurés pour être manipulés par un opérateur dans le but de commander une fonction désirée du véhicule, le système comprenant :
au moins une unité périphérique (PU1, PU2, ..., PU(n-1), Pun) pourvue d'au moins un dispositif de commande (C11, ..., Cn2) parmi ledit ensemble de dispositifs de commande, laquelle au moins une unité périphérique (PU1, PU2, ..., PU(n-1), Pun) est configurée pour générer un signal (S) respectif indiquant un réglage (p11, ..., pn2) du au moins un dispositif de commande (C11, ..., Cn2) et une identité (ID1, ID2, ..., ID(n-1), IDn) pour la au moins une unité périphérique, l'identité (ID1, ID2, ..., ID(n-1), IDn) étant fixe et unique dans le véhicule, et
une unité principale (MU) en liaison de communication avec la au moins une unité périphérique (PU1, PU2, ..., PU(n-1), Pun) et configurée pour recevoir le signal (S) de la au moins une unité périphérique (PU1, PU2, ..., PU(n-1), Pun) et générer, sur la base de celui-ci, au moins un ordre (cmd1, cmd2, ..., cmd(n-1), cmdn) visant à faire exécuter la fonction désirée,
**caractérisé en ce que**
ledit réglage respectif (p11, ..., pn2) indiqué par le au moins un dispositif de commande (C11, ..., Cn2) représente une indication d'état générique, et
l'unité principale (MU) est configurable pour interpréter l'indication d'état générique provenant d'un dispositif de commande (C11, ..., Cn2) donné d'une unité périphérique (PU1, PU2, ..., PU(n-1), Pun) en tant que fonction particulière à exécuter selon la manière dont l'unité principale (MU) est programmée.

2. Système selon la revendication 1, dans lequel le signal (S) émis par la au moins une unité périphérique (PU1, PU2, ..., PU(n-1), Pun) indique, en outre, une identité pour des dispositifs de commande (C11, ..., Cn2) respectifs dans la au moins une unité périphérique (PU1, PU2, ..., PU(n-1), Pun).

3. Système selon l'une ou l'autre des revendications 1 et 2, dans lequel l'unité principale (MU) est en liaison de communication avec la au moins une unité périphérique (PU1, PU2, ..., PU(n-1), Pun) via un premier bus de communication qui est agencé pour rendre possibles deux ou plus de deux connexions logiques à travers un support physique partagé.

4. Système selon la revendication 3, dans lequel le premier bus de communication est extensible de façon à permettre la connexion d'une seconde unité périphérique (PUn) à une première unité périphérique (PU (n-1)) qui est connectée à l'unité principale (MU) via le premier bus de communication, de sorte qu'après établissement de la connexion, la seconde unité périphérique (PUn) partage le premier bus de communication avec la première unité périphérique (PU (n-1)).

5. Système selon l'une quelconque des revendications précédentes, dans lequel l'unité principale (MU) est connectée à un second bus de communication qui est agencé pour rendre possibles deux ou plus de deux connexions logiques à travers un support physique partagé afin de transmettre le au moins un ordre (cmd1, cmd2, ..., cmd(n-1), cmdn) à au moins une unité de commande électronique à bord du véhicule pour la fonction désirée à exécuter.

6. Procédé pour la commande de fonctions dans un véhicule automobile, comprenant un ensemble de dispositifs de commande (C11, ...., Cn2) configurés pour être manipulés par un opérateur dans le but de commander une fonction désirée du véhicule, dans lequel au moins un dispositif de commande (C11, ...., Cn2) parmi ledit ensemble de dispositifs de commande est inclus dans au moins une unité périphérique (PU1, PU2, ..., PU(n-1), Pun), et une unité principale (MU) est en liaison de communication avec la au moins une unité périphérique (PU1, PU2, ..., PU(n-1), Pun), lequel procédé comprend les étapes suivantes :
générer un signal (S) respectif dans la au moins une unité périphérique (PU1, PU2, ..., PU(n-1), Pun), lequel au moins un signal (S) indique un réglage (p11, ..., pn2) du au moins un dispositif de commande (C11, ..., Cn2) et une identité (ID1, ID2, ..., ID(n-1), IDn) pour la au moins une unité périphérique, l'identité (ID1, ID2, ..., ID(n-1), IDn) étant fixe et unique dans le véhicule,
recevoir le au moins un signal (S) dans l'unité principale (MU) et y répondre en
générant le au moins un ordre (cmd1, cmd2, ..., cmd(n-1), cmdn) visant à faire exécuter la fonction désirée, **caractérisé en ce que** ledit réglage (p11, ..., pn2) respectif indiqué par le au moins un dispositif de commande (C11, ..., Cn2) représente une indication d'état générique, et le procédé consistant à
interpréter l'indication d'état générique provenant d'un dispositif de commande (C11, ..., Cn2) donné d'une unité périphérique (PU1, PU2, ..., PU(n-1), Pun) en tant que fonction particulière devant être exécutée selon une programmation de l'unité principale (MU).

7. Procédé selon la revendication 6, dans lequel le signal (S) émis par la au moins une unité périphérique (PU1, PU2, ..., PU(n-1), Pun) indique, en outre, une identité pour des dispositifs de commande (C11, ..., Cn2) respectifs dans la au moins une unité périphérique (PU1, PU2, ..., PU(n-1), Pun).

8. Procédé selon l'une ou l'autre des revendications 6 et 7, comprenant l'étape de transmission du au moins un signal (S) émis par la au moins une unité périphérique (PU1, PU2, ..., PU(n-1), Pun) à l'unité principale (MU) via un premier bus de communication qui est agencé pour rendre possibles deux ou plus de deux connexions logiques à travers un support physique partagé.

9. Procédé selon la revendication 8, dans lequel le premier bus de communication est extensible, et le procédé comprenant, en outre, les étapes suivantes :
connecter une seconde unité périphérique (Pun) à une première unité périphérique (P(un-1)) qui est connectée à l'unité principale (MU) via un premier bus de communication, et ensuite
transmettre un signal (S) émis par la seconde unité périphérique (Pun) à l'unité principale (MU) via le premier bus de communication.

10. Procédé selon l'une quelconque des revendications 6 à 9, dans lequel l'unité principale (MU) est connectée à un second bus de communication qui est agencé pour rendre possibles deux ou plus de deux connexions logiques à travers un support physique partagé, et le procédé comprenant, en outre, l'étape de
transmission du au moins un ordre (cmd1, cmd2, ..., cmd(n-1), cmdn) via le second bus de communication à la au moins une unité de commande électronique à bord du véhicule pour la fonction désirée à exécuter.

11. Programme directement téléchargeable dans la mémoire interne (M) d'un ordinateur et comprenant le logiciel pour commander les étapes selon l'une quelconque des revendications 6 à 10 lorsque ledit programme est exécuté sur l'ordinateur.

12. Support (M) lisible par ordinateur, sur lequel est stocké un programme qui est adapté pour permettre à un ordinateur de commander les étapes selon l'une quelconque des revendications 6 à 10.
